# EUROPEAN PATENT SPECIFICATION

(11) **EP 3 524 629 B1**
(45) Date of publication and mention of the grant of the patent: **09.06.2021**
(21) Application number: 19155712.3
(22) Date of filing: 06.02.2019
(51) Int. Cl.: C08G 18/62, C08G 18/78, C08G 18/79, C08G 18/02, C08G 18/09, C08G 18/18, C08G 18/28, C09D 175/06, C08G 18/42, C08G 18/80

(54) **POLYISOCYANATE COMPOSITION, PAINT COMPOSITION, METHOD OF MANUFACTURING COATING FILM AND COATING FILM**
POLYISOCYANATZUSAMMENSETZUNG, LACKZUSAMMENSETZUNG, VERFAHREN ZUR HERSTELLUNG EINES BESCHICHTUNGSFILMS UND BESCHICHTUNGSFILM
COMPOSITION DE POLYISOCYANATE, COMPOSITION DE PEINTURE, PROCÉDÉ DE FABRICATION D'UN FILM DE REVÊTEMENT ET FILM DE REVÊTEMENT

(30) Priority: 08.02.2018 JP 2018021240
(43) Date of publication of application: 14.08.2019
(73) Proprietor: Asahi Kasei Kabushiki Kaisha, Tokyo 1000006 (JP)
(72) Inventor: Yamauchi, Masakazu, Tokyo, 100-0006 (JP)
(74) Representative: Strehl Schübel-Hopf & Partner

(56) References cited:
- EP-A2- 0 057 653
- WO-A1-2016/146474
- US-A- 3 337 510
- US-A- 6 057 415

## Description

### TECHNICAL FIELD

The present invention relates to a polyisocyanate composition, a paint composition, a method of manufacturing a coating film, and a coating film.

### BACKGROUND ART

A polyisocyanate composition having an isocyanurate group obtained from an aliphatic diisocyanate including 1,6-diisocyanatohexane (also referred to as "hexamethylene diisocyanate"; hereinafter sometimes abbreviated as "HDI") has excellent weather fastness and excellent heat resistance and thus is widely used in various applications.

In recent years, technological development for lowering the viscosity of a polyisocyanate composition used as a curing agent has been vigorously performed (see, for example, Patent Document 1), due to increasing global environmental protection. This is because, by lowering the viscosity of the polyisocyanate composition, an amount of an organic solvent used in the paint composition can be reduced.

Examples of a technique for lowering the viscosity of various polyisocyanate compositions derived from an aliphatic diisocyanate including HDI include a technique concerning a polyisocyanate composition having a uretdione group having a low viscosity (see, for example, Patent Documents 2).

Examples thereof also include a polyisocyanate composition having a uretdione group and excellent curability and excellent storage stability (see, for example, Patent Document 3) and a polyisocyanate composition having a uretoneimino group and excellent moisture stability (see, for example, Patent Documents 4).

### PRIOR ART LITERATURE

### Patent Documents

Patent Document 1: Japanese Unexamined Patent Application, First Publication No. H05-222007
Patent Document 2: Japanese Patent (Granted) Publication No. 3055197
Patent Document 3: PCT International Publication No. WO2007/046470
Patent Document 4: PCT International Publication No. WO2016/035887

### DISCLOSURE OF INVENTION

### Problems to be Solved by the Invention

By using techniques disclosed in Patent Documents 1 and 2, it is possible to obtain a polyisocyanate composition having a low viscosity. However, the polyisocyanate composition obtained by these techniques has low crosslinking properties, and accordingly, the coating film hardness is insufficient in some cases.

In the case where the polyisocyanate composition obtained by using the techniques disclosed in Patent Documents 1 to 4 is used in a paint composition, the water resistance under severe conditions may be insufficient in some cases, and a polyisocyanate composition capable of forming a coating film having excellent water resistance is desirable.

The present invention has been conceived in view of the above circumstances, and provides a polyisocyanate composition having a low viscosity and capable of forming a coating film having excellent hardness and excellent water resistance. A paint composition including the polyisocyanate composition and capable of forming a coating film having excellent hardness and excellent water resistance is provided. A coating film including the paint composition and having excellent hardness and excellent water resistance and a manufacturing method thereof are provided.

### Means for Solving the Problems

That is, the present invention includes the following aspects.

A polyisocyanate composition according to a first aspect that is obtained from an aliphatic diisocyanate including 1,6-diisocyanatohexane, including: an isocyanurate group, a uretdione group, and a group represented by Formula (I), in which a viscosity measured at 25°C is 200 mPa·s to 2,000 mPa·s.

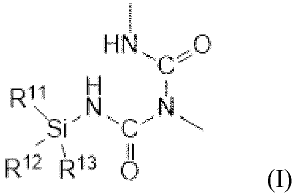

(In Formula (I), R¹¹, R¹², and R¹³ each independently represents a hydrogen atom or a hydrocarbon group having 1 to 20 carbon atoms that may include at least any one of an ester group and an ether group.)

In the polyisocyanate composition according to the first aspect, a ratio of a molar amount of the group represented by Formula (I) with respect to a total molar amount of the isocyanurate group, the uretdione group, and the group represented by Formula (I) is 0.005 to 0.10.

A paint composition according to a second aspect includes: the polyisocyanate composition defined in the first aspect; and at least a polyol of an acrylic polyol and a polyester polyol.

A method of manufacturing a coating film according to a third aspect includes: a step of curing the paint composition defined in the second aspect.

A coating film according to a fourth aspect obtained by curing the paint composition defined in the second aspect.

### Effects of the Invention

The polyisocyanate composition according to the aspect has low viscosity and can form a coating film having excellent hardness and excellent water resistance. The paint composition according to the aspect includes the polyisocyanate composition and can form a coating film having excellent hardness and excellent water resistance. The coating film according to the aspect includes the paint composition and has excellent hardness and excellent water resistance.

### BEST MODE FOR CARRYING OUT THE INVENTION

Hereinafter, modes for carrying out the present invention (hereinafter, simply referred to as "the present embodiment" in some cases) is specifically described. The present embodiment below is provided for describing the present invention, and is not intended to limit the present invention to the following content.

In the present specification, "polyol" means a compound having two or more hydroxy groups (-OH) in one molecule.

In the present specification, the term "polyisocyanate" means a reactant in which a plurality of monomer compounds having two or more isocyanate groups (-NCO) are bonded.

In the present specification, unless otherwise specified, "(meth)acryl" includes methacryl and acryl, and "(meth)acrylate" includes methacrylate and acrylate.

### <<Polyisocyanate composition»

The polyisocyanate composition according to the present embodiment is obtained from an aliphatic diisocyanate including 1,6-diisocyanatohexane and has an isocyanurate group, a uretdione group, and a group represented by Formula (I) (hereinafter, also referred to as a "group (I)" in some cases). The viscosity of the polyisocyanate composition according to the embodiment of the present invention measured at 25°C is 200 mPa·s to 2,000 mPa·s.

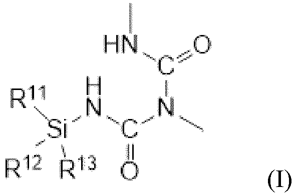

(In Formula (I), R¹¹, R¹², and R¹³ each independently represents a hydrogen atom or a hydrocarbon group having 1 to 20 carbon atoms that may include at least any one of an ester group and an ether group.)

The polyisocyanate composition of the present embodiment has the above constitution and has a low viscosity and can form a coating film having a low viscosity and having excellent hardness and excellent water resistance.

### <Polyisocyanate>

Polyisocyanate included in the polyisocyanate composition according to the present embodiment is derived from an aliphatic diisocyanate including 1,6-diisocyanatohexane (hereinafter, simply referred to as "HDI" in some cases). That is, polyisocyanate included in the polyisocyanate composition according to the present embodiment is a reactant of aliphatic diisocyanate including HDI.

### [Aliphatic diisocyanate]

Aliphatic diisocyanate, which is a raw material of polyisocyanate, is not limited to the following but is preferably one having 4 to 30 carbon atoms. Examples of the aliphatic diisocyanate include HDI, 1,4-diisocyanatobutane, 1,5-diisocyanatopentane, 2,2,4-trimethyl-1,6-diisocyanatohexane, and lysine diisocyanate. These aliphatic diisocyanates may be used singly, or two or more kinds thereof may be used in combination.

In view of ease of industrial availability and reactivity during the manufacturing of polyisocyanate, the polyisocyanate composition according to the present embodiment includes polyisocyanate obtained from an aliphatic diisocyanate including HDI.

In the polyisocyanate composition according to the present embodiment, as the diisocyanate that becomes a raw material of the polyisocyanate, a portion of alicyclic diisocyanate may be included.

The alicyclic diisocyanate is not limited to the following but preferably is one having 8 to 30 carbon atoms. Examples of alicyclic diisocyanate include isophorone diisocyanate (hereinafter referred to as "IPDI" in some cases), 1,3-bis(isocyanatomethyl)-cyclohexane, 4,4'-dicyclohexylmethane diisocyanate, norbornene diisocyanate, and hydrogenated xylylene diisocyanate. These alicyclic diisocyanates may be used singly or two or more kinds thereof may be used in combination.

Among these, in view of weather fastness and the ease of industrial availability, as the alicyclic diisocyanate, IPDI is preferable.

### [Isocyanurate group, uretdione group, and group (I)]

The polyisocyanate composition according to the present embodiment has an isocyanurate group, a uretdione group, and a group (the group (I)) represented by Formula (I).

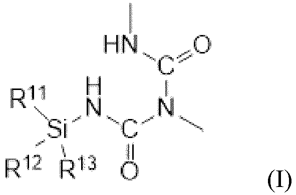

(In Formula (I), R¹¹, R¹², and R¹³ each independently represents a hydrogen atom or a hydrocarbon group having 1 to 20 carbon atoms that may include at least any one of an ester group and an ether group.)

Generally, the "isocyanurate group" is a functional group derived from polyisocyanate including three molecules of a diisocyanate monomer and is a group represented by Formula (II).

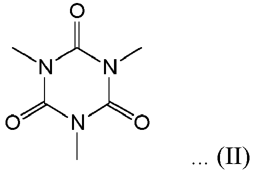

Generally, a "uretdione group" is a functional group derived from polyisocyanate including two molecules of a diisocyanate monomer and is a group represented by Formula (III).

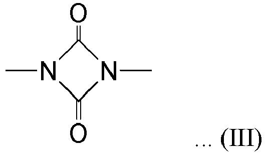

### (Group (I))

The group (I) includes a biuret group and a silyl group and is obtained from an amine compound having a silyl group and two molecules of a diisocyanate monomer.

In Formula (I), R¹¹, R¹², and R¹³ each independently represents a hydrogen atom or a monovalent hydrocarbon group having 1 to 20 carbon atoms that may include at least any one of an ester group (-COO-) and an ether group (-O-). R¹¹, R¹², and R¹³ may be identical to or different from each other.

The monovalent hydrocarbon group having 1 to 20 carbon atoms that may include an ester group and an ether group is preferably an alkyl group having 1 to 20 carbon atoms, more preferably an alkyl group having 1 to 15 carbon atoms, even more preferably an alkyl group having 1 to 10 carbon atoms, and particularly preferably an alkyl group having 1 to 5 carbon atoms.

The alkyl group may have a linear shape, a branched shape, or a cyclic shape.

Examples of the linear alkyl group include a methyl group, an ethyl group, an n-propyl group, an n-butyl group, and an n-pentyl group.

Examples of the branched chain alkyl group include an isopropyl group, a sec-butyl group, an isobutyl group, a tert-butyl group, a neopentyl group, an isopentyl group, a sec-pentyl group, a 3-pentyl group, and a tert-pentyl group.

Examples of the cyclic alkyl group include a cyclopropyl group, a cyclobutyl group, and a cyclopentyl group.

Examples of the monovalent hydrocarbon group having 1 to 20 carbon atoms that may include at least any one of an ester group and an ether group include a group represented by Formula (IV) (hereinafter, referred to as a "group (IV)").

-(CH₂)ₙ₁-X-(CH₃)ₙ₂ ... (IV)

In the group (IV), a bond opposite to X in -(CH₂)ₙ₁- is bonded to N in Formula (I). n1 and n2 is an integer satisfying 1 ≤ n1 + n2 ≤ 20. That is, both of n1 and n2 are not 0.

Among these, n1 and n2 each independently and preferably represents an integer of 0 to 20, more preferably an integer of 0 to 4, and even more preferably an integer of 0 to 2.

In the group (IV), X represents an ester group (-COO-) or an ether group (-O-).

Among these, R¹¹, R¹², and R¹³ are each preferably a hydrocarbon group having 1 to 20 carbon atoms that does not include an ester group and an ether group, more preferably an alkyl group having 1 to 5 carbon atoms, even more preferably a linear alkyl group, and particularly preferably a methyl group or an ethyl group.

According to the present embodiment a lower limit of a ratio (a molar ratio of the group (I) / (the isocyanurate group + the uretdione group + the group (I)) of a molar amount of the group (I) with respect to the total molar amount of an isocyanurate group, a uretdione group, and the group (I) is 0.005, preferably 0.007, more preferably 0.010, and particularly preferably 0.020.

Meanwhile, an upper limit of a molar ratio of the group (I) / (the isocyanurate group + the uretdione group + the group (I)) is 0.10, preferably 0.08, more preferably 0.06, and particularly preferably 0.04.

That is, the molar ratio of the group (I) / (the isocyanurate group + the uretdione group + the group (I)) is 0.005 to 0.10, preferably 0.007 to 0.08, more preferably 0.010 to 0.06, and particularly preferably 0.020 to 0.04.

In a case where the molar ratio of the group (I) / (the isocyanurate group + the uretdione group + the group (I)) is the lower limit or more, the water resistance of the coating film that can be obtained by using a polyisocyanate composition according to the present embodiment can be sufficiently exhibited, and in a case where the molar ratio is the upper limit or less, the coating film hardness can be maintained.

In a case where a ratio of the molar amount of the group (I) with respect to the total molar amount of the isocyanurate group, the uretdione group, and the group (I) is in the above range, both of the water resistance and the base adhesiveness of the coating film obtained by using the polyisocyanate composition according to the present embodiment can be achieved.

As described in examples below, the molar amount of the group (I) can be measured by the measurement of ¹H-NMR and ¹³C-NMR.

In the present specification, as described in the examples below, in a case where the expression "water resistance" means properties in which, in a case where the coating film obtained by using the polyisocyanate composition according to the present embodiment is left for 72 hours at 60°C under the humidity of 87%, the coating film external appearance is not changed or the change of the coating film external appearance is suppressed to be low.

As described in the examples below, the expression "base adhesiveness" means adhesiveness of a former coating film and a new coating film, in a case where a coating film (hereinafter, referred to as a "former coating film" in some cases) is formed by applying a paint composition including the polyisocyanate composition according to the present embodiment, and also a case where a coating film (hereinafter, referred to as a "new coating film") is formed by applying a paint composition including the polyisocyanate composition to the former coating film.

Examples of a method of controlling a molar ratio of the group (I) / (the isocyanurate group + the uretdione group + the group (I)) include a method of mixing a reaction solution obtained by performing an isocyanurate formation reaction of HDI or a uretdione formation reaction, an amine compound (hereinafter, referred to as an "aminosilyl group-containing compound") having a silyl group, and a reaction solution obtained by performing the biuret formation reaction obtained from two molecules of diisocyanate and removing a remaining diisocyanate monomer. Otherwise, examples thereof include a method of using hexamethyldisilazane as a catalyst for the isocyanurate formation reaction, adding monoalcohol for deactivation of the reaction, and maintaining the mixture at a high temperature of about 150°C and preferably at a high temperature of about 160°C for one hour or more.

Among these, in view of freely controlling the molar ratio of the added raw material, a method of mixing a reaction solution obtained by performing the isocyanurate formation reaction of 1,6-diisocyanatohexane, the isocyanurate formation reaction of HDI, or the uretdione formation reaction of the former, an aminosilyl group-containing compound, and the reaction solution obtained by performing the biuret formation reaction obtained from two molecules of diisocyanate, and removing a remaining diisocyanate monomer is preferable.

The concentration of the isocyanurate trimer in the polyisocyanate composition according to the present embodiment is not particularly limited, but is preferably 55 mass% to 95 mass% and more preferably 60 mass% to 95 mass%.

In a case where the concentration of the isocyanurate trimer is the lower limit or more, the viscosity of the polyisocyanate composition according to the present embodiment can be effectively decreased. Meanwhile, in a case where the concentration of the isocyanurate trimer is the upper limit or less, the yield of the polyisocyanate composition according to the present embodiment can be maintained to be higher.

The concentration of the isocyanurate trimer can be measured by gel permeation chromatography (hereinafter, also referred to as "GPC" in some cases).

In the polyisocyanate composition according to the present embodiment, the lower limit of a ratio (the molar ratio of the uretdione group / the isocyanurate group) of the molar amount of the uretdione group with respect to the molar amount of the isocyanurate group is not particularly limited, and is preferably 0.01, more preferably 0.15, even more preferably 0.2, and particularly preferably 0.3.

Meanwhile, the upper limit of the molar ratio of the uretdione group / the isocyanurate group is not particularly limited, but is preferably 0.50, more preferably 0.45, even more preferably 0.4, and particularly preferably 0.38.

That is, the molar ratio of the uretdione group / the isocyanurate group is not particularly limited, but is preferably 0.01 to 0.50, more preferably 0.15 to 0.45, even more preferably 0.2 to 0.4, and particularly preferably 0.3 to 0.38.

In a case where the molar ratio of the uretdione group / the isocyanurate group is the lower limit or more, the viscosity of the polyisocyanate composition according to the present embodiment can be more effectively decreased. Meanwhile, by causing the molar ratio of the uretdione group / the isocyanurate group to be the upper limit or less, the crosslinking properties can be further improved.

The molar ratio of the uretdione group / the isocyanurate group can be measured by ¹³C-NMR Specifically, the measurement can be performed according to the method described in the examples below.

Examples of the method of controlling the molar ratio of the uretdione group / the isocyanurate group to the above range include a method of controlling the molar ratio by performing the isocyanurate formation reaction of HDI, deactivating the catalyst, and performing the reaction for about several hours (preferably for about one hour to three hours) at the temperature of about 140°C to 160°C (preferably the temperature of about 145°C to 165°C). Examples thereof further include a method of adding a catalyst for uretdione formation such as a tertiary phosphine on HDI to the polyisocyanate composition obtained by performing the isocyanurate formation reaction of HDI and mixing a portion of the reacted polyisocyanate composition for about several hours to several tens of hours at the temperature of about 20°C to 80°C.

Among these, in view of ease of availability, a method of performing control by performing the isocyanurate formation reaction of HDI, deactivating a catalyst, and performing reaction for several hours (preferably about one to three hours) at the temperature of about 140°C to 160°C (preferably the temperature of about 145°C to 165°C) is preferable.

### [Allophanate group]

The polyisocyanate composition according to the present embodiment may have an allophanate group in addition to the isocyanurate group, the uretdione group, and the group (I).

Generally, the "allophanate group" is a group that is formed with a hydroxyl group and an isocyanate group of alcohol and is represented by Formula (V).

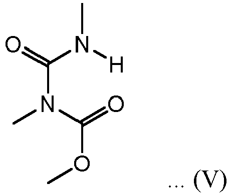

In a case where the polyisocyanate composition of the present embodiment has an allophanate group, alcohol used for forming the allophanate group is preferably alcohol formed only with carbon, hydrogen, and oxygen.

Specifically, the alcohol is not limited to the following, but examples thereof include monoalcohol and dialcohol. These alcohols may be used singly, or two or more kinds thereof may be used in combination.

Examples of the monoalcohol include methanol, ethanol, propanol, butanol, pentanol, hexanol, heptanol, octanol, and nonanol.

Examples of the dialcohol include ethylene glycol, 1,3-butanediol, neopentyl glycol, and 2-ethylhexanediol.

Among these, the alcohol is preferably monoalcohol and more preferably monoalcohol having a molecular weight of 200 or less.

In the polyisocyanate composition of the present embodiment, a ratio (a molar ratio of the allophanate group / the isocyanurate group) of a molar amount of the allophanate group with respect to a molar amount of the isocyanurate group is preferably 0.01 to 0.20, more preferably 0.01 to 0.10, even more preferably 0.01 to 0.05, and particularly preferably 0.01 to 0.03. By causing the molar ratio of the allophanate group / the isocyanurate group to be the upper limit or less, the crosslinking properties can be further improved.

The molar ratio of the allophanate group / the isocyanurate group can be measured by a method described in the examples below.

### [Other groups]

In addition to the isocyanurate group, the uretdione group, and the group (I), the polyisocyanate composition according to the present embodiment may include other groups such as an iminooxadiazinedione group, a urethane group, a urea group, a biuret group other than the group (I), a carbodiimide group, and a uretonimino group.

### <Method of manufacturing polyisocyanate composition>

Hereinafter, an example of the method of manufacturing the polyisocyanate composition according to the present embodiment is described.

The polyisocyanate composition according to the present embodiment is at least used as HDI(1,6-diisocyanatohexane) as a raw material.

The polyisocyanate composition according to the present embodiment can be obtained by performing the isocyanurate formation reaction for forming an isocyanurate group, the uretdione formation reaction for forming a uretdione group, and reaction for forming the group (I) sequentially or in parallel in the presence of excess diisocyanate monomer, and removing an unreacted diisocyanate monomer after the reaction. The polyisocyanate composition can be obtained by mixing resultants obtained by respectively performing three of the reactions.

Among these, in view of ease of availability and free adjustment of the molar ratio of the group (I), a method of sequentially performing the isocyanurate formation reaction and the uretdione formation reaction and performing the reaction for forming the group (I) in parallel is preferable.

Alcohol such as alkyl monoalcohol and alkyl diol can be used in combination, as an auxiliary raw material. In a case where alcohol is used, as described above, it is preferable to use the alcohol such that the molar ratio of the allophanate group / the isocyanurate group in the polyisocyanate composition according to the present embodiment is within the above range.

The method of manufacturing a polyisocyanate composition according to the present embodiment is preferably a method of adding a polymerization catalyst to the HDI of the raw material or the auxiliary raw material, allowing the reaction to proceed until a predetermined degree, and removing unreacted HDI, if necessary, so as to obtain the polyisocyanate composition.

### [Method of manufacturing isocyanurate group-containing polyisocyanate]

In a case where an isocyanurate group-containing polyisocyanate is derived from a diisocyanate monomer, generally, a catalyst for the isocyanurate formation reaction is used.

The catalyst for the isocyanurate formation reaction preferably has basicity. Examples of the catalyst for the isocyanurate formation reaction include those provided in 1) to 7) below:
1) hydroxide or an organic weak acid salt of tetraalkylammonium;
2) hydroxide or an organic weak acid salt of hydroxyalkylammonium;
3) a metal salt of alkyl carboxylic acid;
4) metal alcoholate such as sodium and potassium;
5) an aminosilyl group-containing compound such as hexamethyldisilazane;
6) Mannich bases; and
7) a combination of tertiary amines and an epoxy compound.

Examples of the tetraalkylammonium include tetramethylammonium and tetraethylammonium.

Examples of the organic weak acid include acetic acid and capric acid.

Examples of the hydroxyalkylammonium include
trimethylhydroxypropylammonium, trimethylhydroxyethylammonium,
triethylhydroxypropylammonium, and triethylhydroxyethylammonium.

Examples of the alkyl carboxylic acid include acetic acid, caproic acid, octylic acid, and myristic acid.

Examples of metal constituting a metal salt include tin, zinc, lead, sodium, and potassium.

Among these, in view of catalyst efficiency, the catalyst for the isocyanurate formation reaction is preferably 1), 2), 3), 4), or 5) and more preferably an organic weak acid salt of 1).

An addition amount of the catalyst for the isocyanurate formation reaction is preferably 10 ppm to 1,000 ppm, more preferably 10 ppm to 500 ppm, and even more preferably 10 ppm to 100 ppm with respect to the mass of introduced diisocyanate.

The lower limit of the temperature for the isocyanurate formation reaction is preferably 50°C, more preferably 54°C, even more preferably 57°C, and particularly preferably 60°C.

Meanwhile, the upper limit of the temperature for the isocyanurate formation reaction is preferably 120°C, more preferably 100°C, even more preferably 90°C, and particularly preferably 80°C.

The temperature for the isocyanurate formation reaction is preferably 50°C to 120°C, more preferably 54°C to 100°C, even more preferably 57°C to 90°C, and particularly preferably 60°C to 80°C.

In a case where the temperature for the isocyanurate formation reaction is the upper limit or less, characteristic change such as coloration can be more effectively prevented.

### [Method of manufacturing uretdione group-containing polyisocyanate]

The uretdione group-containing polyisocyanate can be obtained by using a catalyst for the uretdione formation reaction.

The catalyst for the uretdione formation reaction is not limited to the following, but examples thereof include tertiary phosphine such as trialkylphosphine, tris(dialkylamino)phosphine, and cycloalkylphosphine.

Examples of the trialkylphosphine include tri-n-butylphosphine and tri-n-octylphosphine.

Examples of the tris(dialkylamino)phosphine include tris(dialkylamino)phosphine such as tris(dimethylamino)phosphine.

Examples of the cycloalkylphosphine include cyclohexyl-di-n-hexylphosphine.

Many of these compounds simultaneously accelerate the isocyanurate formation reaction, and thus generate isocyanurate-type polyisocyanate in addition to the uretdione group-containing polyisocyanate.

In a case where the desired yield is obtained, a deactivator of the catalyst for the uretdione formation reaction such as phosphoric acid or methyl paratoluene sulfonate is added to stop the uretdione formation reaction.

The addition amount of the catalyst for the uretdione formation reaction is preferably 10 ppm to 10,000 ppm, more preferably 10 ppm to 1,000 ppm, and even more preferably 10 ppm to 500 ppm by a mass ratio, with respect to diisocyanate as a raw material.

The lower limit of the temperature for the uretdione formation reaction is preferably 20°C, more preferably 25°C, even more preferably 30°C, and particularly preferably 35°C.

The upper limit of the temperature for the uretdione formation reaction is preferably 120°C, more preferably 110°C, even more preferably 100°C, and particularly preferably 90°C.

That is, the temperature for the uretdione formation reaction is preferably 20°C to 120°C, more preferably 25°C to 110°C, even more preferably 30°C to 100°C, and particularly preferably 35°C to 90°C.

In a case where the temperature for the uretdione formation reaction is the upper limit or less, it is possible to more effectively prevent change in properties of the polyisocyanate composition capable of obtaining coloration.

It is possible to obtain uretdione group-containing polyisocyanate by heating a diisocyanate monomer without using a catalyst for the uretdione formation reaction.

In a case where the catalyst for the uretdione formation reaction is not used, the lower limit of the temperature for heating a diisocyanate monomer is preferably 120°C, more preferably 130°C, even more preferably 140°C, and particularly preferably 145°C.

The upper limit of the temperature for heating a diisocyanate monomer is preferably 180°C, more preferably 175°C, even more preferably 170°C, and particularly preferably 165°C.

That is, the temperature of heating diisocyanate monomer is preferably 120°C to 180°C, more preferably 130°C to 175°C, even more preferably 140°C to 170°C, and particularly preferably 145°C to 165°C.

In a case where the catalyst for the uretdione formation reaction is not used, the lower limit of the heating time is preferably 0.2 hours, more preferably 0.4 hours, even more preferably 0.6 hours, particularly preferably 0.8 hours, and most preferably 1.0 hour.

The upper limit of the heating time is preferably 8 hours, more preferably 6 hours, even more preferably 4 hours, particularly preferably 3 hours, and most preferably 2 hours.

That is, the heating time is preferably 0.2 hours to 8 hours, more preferably 0.4 hours to 6 hours, even more preferably 0.6 hours to 4 hours, particularly preferably 0.8 hours to 3 hours, and most preferably 1.0 hour to 2 hours.

In a case where the heating time is the lower limit or more, it is possible to cause the viscosity to be lower, and in a case where the heating time is the upper limit or less, the coloration of the polyisocyanate itself can be further suppressed.

In a case where the polyisocyanate composition according to the present embodiment is obtained without using the catalyst for the uretdione formation reaction, in view of the decrease of the unreacted diisocyanate monomer concentration, the decrease of the change rate of the molecular weight after the storage of the obtained polyisocyanate composition, and the decrease of the yellowing properties at high temperature baking after the uretdione formation reaction and the isocyanurate formation reaction by merely heating are completed, it is preferable to remove the unreacted diisocyanate monomer.

### [Method of manufacturing allophanate group-containing polyisocyanate]

The allophanate group-containing polyisocyanate can be obtained by adding alcohol to HDI and using a catalyst for allophanate formation reaction. Examples of the alcohol to be used include the same as those exemplified in "[Allophanate group]".

The amount of alcohol to be added is not limited to the following, but is preferably 10/1 to 1000/1 and more preferably 100/1 to 1000/1 in terms of the molar ratio between the isocyanate groups of HDI and the hydroxyl group of the alcohol compound. In a case where the amount is the lower limit or more, it is possible to ensure a more appropriate average number of isocyanate groups with respect to the obtained polyisocyanate.

The catalyst for allophanate formation reaction is not limited to the following, but examples thereof include alkyl carboxylic acid salt of tin, lead, zinc, bismuth, zirconium, or zirconyl.

Examples of alkyl carboxylic acid salt of tin (organotin compound) include tin 2-ethylhexanoate and dibutyltin dilaurate.

Examples of alkyl carboxylic acid salt of lead (organic lead compound) include lead 2-ethylhexanoate.

Examples of alkyl carboxylic acid salt of zinc (organozinc compound) include zinc 2-ethylhexanoate.

Examples of alkyl carboxylic acid salt of bismuth include bismuth 2-ethylhexanoate.

Examples of alkyl carboxylic acid salt of zirconium include zirconium 2-ethylhexanoate.

Examples of the zirconyl alkylcarboxylate include zirconyl 2-ethylhexanoate.

In a case where the desired yield has been obtained, a deactivator of a catalyst for allophanate formation reaction such as phosphoric acid and methyl paratoluene sulfonate may be added to stop the allophanate formation reaction.

The amount of the catalyst for allophanate formation reaction to be added is preferably 10 ppm to 10,000 ppm, more preferably 10 ppm to 1,000 ppm, and even more preferably 10 ppm to 500 ppm in terms of the mass ratio with respect to diisocyanate as a raw material.

The lower limit of the temperature for allophanate formation reaction is preferably 60°C, more preferably 70°C, even more preferably 80°C, and particularly preferably 90°C.

The upper limit of the temperature for allophanate formation reaction is preferably 160°C, more preferably 155°C, even more preferably 150°C, and particularly preferably 145°C.

That is, the temperature for allophanate formation reaction is preferably 60°C to 160°C, more preferably 70°C to 155°C, even more preferably 80°C to 150°C, and particularly preferably 90°C to 145°C.

In a case where the temperature for allophanate formation reaction is the upper limit or less, the characteristic change of the coloration of the obtained polyisocyanate can be effectively prevented.

The lower limit of the reaction time is preferably 0.2 hours, more preferably 0.4 hours, even more preferably 0.6 hours, particularly preferably 0.8 hours, and most preferably 1.0 hour.

The upper limit of the reaction time is preferably 8 hours or less, more preferably 6 hours, even more preferably 4 hours, particularly preferably 3 hours, and most preferably 2 hours.

That is, the time for allophanate formation reaction is preferably 0.2 hours to 8 hours, more preferably 0.4 hours to 6 hours, even more preferably 0.6 hours to 4 hours, particularly preferably 0.8 hours to 3 hours, and most preferably 1.0 hour to 2 hours.

In a case where the time for allophanate formation reaction is the lower limit or more, the viscosity can be caused to be lower, and in a case where the time is the upper limit or less, the coloration of polyisocyanate can be further suppressed.

The catalyst for the isocyanurate formation reaction can be used as the catalyst for allophanate formation reaction. In a case where the allophanate formation reaction is performed with the catalyst for the isocyanurate formation reaction, an isocyanurate-type polyisocyanate is simultaneously formed. In view of improving productivity from the economic point of view, it is preferable to perform the allophanate formation reaction and the isocyanurate formation reaction by using the catalyst for the isocyanurate formation reaction as the catalyst for allophanate formation reaction.

### [Method of manufacturing group (I)-containing polyisocyanate]

The group (I)-containing polyisocyanate is obtained by reaction of a primary amine compound in which a silyl group is directly bonded to a nitrogen atom with two molecules of a diisocyanate monomer.

In view of ease of availability, the primary amine compound in which a silyl group is directly bonded to a nitrogen atom is preferably obtained by reacting a secondary amine compound in which two silyl groups are bonded to a nitrogen atom with alcohol. Examples of the secondary amine compound in which two silyl groups are bonded to the nitrogen atom include tetramethyldisilazane.

Specific examples of the method of manufacturing the group (I)-containing polyisocyanate include a method of reacting tetramethyldisilazane and alcohol with each other to form trimethylsilylsilazane, and reacting the trimethylsilylsilazane and a diisocyanate monomer with each other to form the group (I)-containing polyisocyanate.

In order to generate the group (I), the lower limit of the reaction temperature needs to be 150°C. Among these, the lower limit is preferably 152°C, even more preferably 155°C, and particularly preferably 158°C.

Meanwhile, the upper limit of the reaction temperature is preferably 180°C, more preferably 175°C, even more preferably 170°C, and particularly preferably 165°C.

That is, the reaction temperature is preferably 150°C to 180°C, more preferably 152°C to 175°C, even more preferably 155°C to 170°C, and particularly preferably 158°C to 165°C.

In order to generate the group (I), the lower limit of the heating time is 1.0 hour. Among these, the heating time is more preferably 1.2 hours, even more preferably 1.4 hours, particularly preferably 1.6 hours, and most preferably 18 hours.

Meanwhile, the upper limit of the heating time is preferably 8 hours, more preferably 6 hours, even more preferably 4 hours, particularly preferably 3 hours, and most preferably 2.5 hours.

That is, the heating time is preferably 1.0 hour to 8 hours, more preferably 1.2 hours to 6 hours, even more preferably 1.4 hours to 4 hours, particularly preferably 1.6 hours to 3 hours, and most preferably 1.8 hour to 2.5 hours.

Therefore, the group (I)-containing polyisocyanate cannot be manufactured by the heat treatment in the thin film distillation, for example, by the heating at 160°C for about several minutes.

In a case where the heating time is the lower limit or more, the generation amount of the group (I) can be maintained, and also in a case where the heating time is the upper limit or less, the coloration of the polyisocyanate composition can be more effectively suppressed.

The aminosilyl group-containing compound such as tetramethyldisilazane can function as an isocyanurate-forming catalyst under a high-temperature condition such as 120°C or more. Therefore, the aminosilyl group-containing compound is added as the isocyanurate-forming catalyst, deactivation is performed with alcohol such as n-butanol, and the obtained trimethylsilyl silazane and a diisocyanate monomer are allowed to react with each other, so as to obtain a group (I)-containing polyisocyanate composition. However, in this case, after the isocyanurate formation reaction, it is required to perform a reaction for forming the group (I) at a high temperature of 120°C or more.

Meanwhile, Japanese Unexamined Patent Application, First Publication No. 2002-526551 discloses a uretdione group and an isocyanurate group-containing polyisocyanate composition in which hexamethyldisilazane is used as an isocyanurate-forming catalyst, but in the method disclosed in Japanese Unexamined Patent Application, First Publication No. 2002-526551, after n-butanol is added, the mixture is maintained at 88°C for one hour, and thus the group (I)-containing polyisocyanate cannot be manufactured such that a molar ratio of the group (I) /(isocyanurate group + uretdione group + uretdione group) is in the above range.

In the method of manufacturing a polyisocyanate composition according to the embodiment, in view of production efficiency and ease of adjustment of the content of the group (I)-containing polyisocyanate composition, it is preferable that the isocyanurate formation reaction and the uretdione formation reaction be sequentially performed, and the reaction for forming the group (I) be performed in parallel as a separate reaction.

In the method of manufacturing a polyisocyanate composition according to the embodiment, in a case of accompanying the allophanate formation reaction, a method of performing the isocyanurate formation reaction and the allophanate formation reaction in parallel, in advance, and then performing the uretdione formation reaction is preferable. In order to simplify the manufacturing process, a method of simultaneously performing the isocyanurate formation reaction and the allophanatization reaction with a common catalyst and then performing the uretdione formation reaction by heat is more preferable.

In a case where the polymerization reaction such as the isocyanurate formation reaction, the uretdione formation reaction, and the reaction for forming the group (I) reaches a desired polymerization degree, polymerization reaction is stopped.

The stopping of the polymerization reaction is not limited to below, but can be achieved by adding an acidic compound to the reaction solution to neutralize the polymerization reaction catalyst or performing the thermal decomposition, or the chemical decomposition for inactivation. Examples of the acidic compound include phosphoric acid, acidic phosphoric acid ester, sulfuric acid, hydrochloric acid, and sulfonic acid compounds.

After the reaction is stopped, filtration is performed, if necessary.

The reaction solution immediately after the stopping of the reaction generally includes unreacted HDI monomer, and thus it is preferable to remove the monomer by a thin film evaporator or an extraction. It is preferable to perform the post-treatment such that the HDI monomer concentration contained in the polyisocyanate composition is controlled to 1 mass% or less.

### <Physical properties of polyisocyanate composition>

### [Diisocyanate monomer concentration]

The diisocyanate monomer concentration in the polyisocyanate composition according to the present embodiment is preferably 1 mass% or less, more preferably 0.5 mass% or less, even more preferably 0.3 mass% or less, and particularly preferably 0.2 mass% or less. In a case where the diisocyanate monomer concentration in the polyisocyanate composition according to the present embodiment is the upper limit or less, the crosslinking properties can be improved.

The diisocyanate monomer concentration in the polyisocyanate composition according to the present embodiment can be measured by the method described in the examples below.

### [Viscosity]

The lower limit of the viscosity of the polyisocyanate composition according to the present embodiment at 25°C is 200 mPa·s, preferably 250 mPa·s, more preferably 300 mPa·s, even more preferably 350 mPa·s, and particularly preferably 400 mPa·s.

Meanwhile, the upper limit of the viscosity of the polyisocyanate composition according to the present embodiment at 25°C is 2,000 mPa·s, preferably 1,500 mPa·s, more preferably 1,000 mPa·s, even more preferably 800 mPa·s, and particularly preferably 650 mPa·s.

The viscosity of the polyisocyanate composition according to the present embodiment at 25°C is 200 mPa·s to 2,000 mPa·s, preferably 250 mPa·s to 1,500 mPa·s, more preferably 300 mPa·s to 1,000 mPa·s, even more preferably 350 mPa·s to 800 mPa·s, and particularly preferably 400 mPa·s to 650 mPa·s.

In a case where the viscosity of the polyisocyanate composition according to the present embodiment at 25°C is the lower limit or more, the crosslinking properties can be improved. Meanwhile, when the viscosity of the polyisocyanate composition according to the present embodiment at 25°C is the upper limit or less, the concentration of solid content of the paint composition including the polyisocyanate composition according to the present embodiment can be increased.

The viscosity of the polyisocyanate composition according to the present embodiment can be measured by using the polyisocyanate composition purified such that a nonvolatile content is 98 mass% or more with an E-type viscometer (manufactured by Tokyo Keiki Inc.). Specifically, the viscosity can be measured by the method described in the examples below.

### [Content ratio of isocyanate group (NCO content)]

The lower limit of the content ratio (NCO content ratio) of the isocyanate group of the polyisocyanate composition according to the present embodiment is preferably 21 mass% and more preferably 22 mass%.

The upper limit of the NCO content ratio is preferably 25 mass% and more preferably 24 mass%.

That is, the NCO content ratio is preferably 21 mass% to 25 mass% and more preferably 22 mass% to 24 mass%.

In a case where the NCO content ratio is the lower limit or more, satisfactory physical properties of the coating film such as hardness of the coating film obtained from the polyisocyanate composition according to the present embodiment can be obtained. Meanwhile, in a case where the NCO content ratio is the upper limit or less, the diisocyanate monomer concentration can be more effectively decreased.

The NCO content ratio can be obtained by back titration with IN hydrochloric acid after neutralizing the isocyanate group of the polyisocyanate composition according to the present embodiment with excess 2N amine.

The NCO content ratio is a value with respect to the solid content of the polyisocyanate composition, and the solid content (nonvolatile content) of the polyisocyanate composition can be measured by the method described in the examples described below.

### [Number-average molecular weight]

The lower limit of the number-average molecular weight of the solid content in the polyisocyanate composition according to the present embodiment is not particularly limited, and is preferably 400, more preferably 430, even more preferably 460, and particularly preferably 480.

Meanwhile, the upper limit of the number-average molecular weight of the solid content in the polyisocyanate composition according to the present embodiment is not particularly limited, and is preferably 1,000, more preferably 800, even more preferably 700, and particularly preferably 600.

That is, the number-average molecular weight of the solid content in the polyisocyanate composition according to the present embodiment is not particularly limited, and is preferably 400 to 1,000, more preferably 430 to 800, even more preferably 460 to 700, and particularly preferably 480 to 600.

When the number-average molecular weight of the solid content in the polyisocyanate composition according to the present embodiment is the lower limit or more, the yield of the obtained polyisocyanate composition is further increased.

Meanwhile, when the number-average molecular weight of the solid content in the polyisocyanate composition according to the present embodiment is the upper limit or less, the gloss of the coating film obtained from the polyisocyanate composition according to the present embodiment tends to further increase.

The number-average molecular weight of the solid content of the polyisocyanate composition according to the present embodiment can be obtained by GPC.

### «Paint composition»

The paint composition according to the present embodiment includes the polyisocyanate composition according to the embodiment above.

The polyisocyanate composition can be suitably used as a curing agent of the paint composition.

The paint composition according to the present embodiment contains a resin component, and the resin component is not particularly limited but preferably contains a compound having two or more active hydrogen atoms having reactivity with the isocyanate group.

The compound having two or more active hydrogen atoms in a molecule is not limited to the following, and examples thereof include polyols, polyamines, and polythiols. The compound having two or more active hydrogen atoms in a molecule may be used singly or two or more kinds thereof may be used in combination.

Among these, the compound having two or more active hydrogen atoms in a molecule is preferably polyol.

The polyol is not limited to the following, but specific examples thereof include polyester polyol, polyether polyol, acryl polyol, polyolefin polyol, and fluorine polyol.

Among these, the polyol is preferably acrylic polyol in view of weather fastness, chemical resistance, and hardness and is preferably polyester polyol, in view of mechanical strength and oil resistance.

That is, the paint composition according to the present embodiment preferably includes the polyisocyanate composition and at least a polyol of an acrylic polyol and a polyester polyol.

### <Polyol>

### [Polyester polyol]

Polyester polyol can be obtained by performing a condensation reaction with dicarboxylic acid singly or a mixture of two or more kinds thereof and polyhydric alcohol or a mixture of two or more kinds thereof.

Examples of the dicarboxylic acid include carboxylic acids such as succinic acid, adipic acid, dimer acid, maleic acid anhydride, phthalic acid anhydride, isophthalic acid, terephthalic acid, and 1,4-cyclohexanedicarboxylic acid.

Examples of the polyhydric alcohol include ethylene glycol, propylene glycol, diethylene glycol, 1,4-butanediol, neopentyl glycol, 1,6-hexanediol, trimethylpentanediol, cyclohexanediol, trimethylolpropane, glycerin, pentaerythritol, 2-methylol propane diol, and ethoxylated trimethylol propane.

As a specific production method of the polyester polyol, for example, a condensation reaction can be performed by mixing the above components and heating the mixture at about 160°C to 220°C.

Otherwise, for example, polycaprolactones obtained by performing ring-opening polymerization on lactones such as ε-caprolactone with polyhydric alcohol can also be used as the polyester polyol.

The polyester polyol obtained by the above production method can be modified by using aromatic diisocyanate, aliphatic diisocyanate, alicyclic diisocyanate, and compounds obtained from these. Among these, in view of weather resistance and yellowing resistance of the obtained coating film, it is preferable to modify the polyester polyol by using aliphatic diisocyanate, alicyclic diisocyanate, and a compound obtained from these.

In the case where the paint composition according to the present embodiment includes a solvent having a high water content, a portion of the carboxylic acid derived from the dicarboxylic acid in the polyester polyol is allowed to remain and is neutralized with a base such as amine or ammonia, so as to obtain a water-soluble or water-dispersible resin.

### [Polyether polyol]

The polyether polyol can be obtained, for example, by any one method of (1) to (3).
(1) A method of using a catalyst by randomly adding or block-adding alkylene oxide singly or a mixture thereof to obtain polyether polyols to a polyvalent hydroxy compound alone or a mixture thereof.
   Examples of the catalyst include hydroxides (lithium, sodium, and potassium), a strong basic catalyst (alcoholate, and alkyl amine), a complex metal cyanide compound complex (metal porphyrin, and zinc hexacyanocobaltate complex).
   Examples of the alkylene oxide include ethylene oxide, propylene oxide, butylene oxide, cyclohexene oxide, and styrene oxide.
(2) A method of causing an alkylene oxide and a polyamine compound to react with each other, to obtain polyether polyols.
   Examples of the polyamine compound include ethylenediamines.
   Examples of the alkylene oxide include those as exemplified in (1).
(3) A method of polymerizing acrylamide with the polyether polyols obtained in (1) or (2) as a medium so as to obtain so-called polymer polyols.

Examples of the polyvalent hydroxy compound include those as provided in (i) to (vi).
(i) diglycerin, ditrimethylolpropane, pentaerythritol, and dipentaerythritol;
(ii) a sugar alcohol-based compound such as erythritol, D-threitol, L-arabinitol, ribitol, xylitol, sorbitol, mannitol, galactitol, and rhamnitol;
(iii) monosaccharides such as arabinose, ribose, xylose, glucose, mannose, galactose, fructose, sorbose, rhamnose, fucose, and ribodesose;
(iv) disaccharides such as trehalose, sucrose, maltose, cellobiose, gentiobiose, lactose, and melibiose;
(v) trisaccharides such as raffinose, gentianose, and melezitose;
(vi) tetrasaccharides such as stachyose

### [Acrylic polyol]

The acrylic polyol can be obtained, for example, by polymerizing only a polymerizable monomer having one or more active hydrogen atoms in one molecule, or copolymerizing a polymerizable monomer having one or more active hydrogen atoms in one molecule and another monomer copolymerizable with the polymerizable monomer.

Examples of the polymerizable monomer having one or more active hydrogen atoms in one molecule include those provided in (i) to (vi). These may be used singly or two or more kinds thereof may be used in combination.
(i) acrylic acid esters having active hydrogen such as 2-hydroxyethyl acrylate, 2-hydroxypropyl acrylate, and 2-hydroxybutyl acrylate;
(ii) methacrylic acid esters having active hydrogen such as 2-hydroxyethyl methacrylate, 2-hydroxypropyl methacrylate, 2-hydroxybutyl methacrylate, 3-hydroxypropyl methacrylate, and 4-hydroxybutyl methacrylate;
(iii) (meth)acrylic acid esters having polyvalent active hydrogen such as (meth)acrylic acid monoester of triols such as glycerin and trimethylolpropane;
(iv) monoether of polyether polyols and the above (meth)acrylic acid esters having active hydrogen

Examples of the polyether polyols include polyethylene glycol, polypropylene glycol, and polybutylene glycol;
(v) an adduct of glycidyl (meth)acrylate and a monobasic acid (for example, acetic acid, propionic acid, and p-tert-butylbenzoic acid); and
(vi) an adduct obtained by ring-opening polymerizing lactones with active hydrogens of the (meth)acrylic acid esters having active hydrogen described above

Examples of the lactones include ε-caprolactam and γ-valerolactone.

Examples of the other monomer copolymerizable with the polymerizable monomer include those provided in (i) to (iv). These may be used singly or two or more kinds thereof may be used in combination.
(i) (Meth)acrylic acid esters such as methyl acrylate, ethyl acrylate, isopropyl acrylate, n-butyl acrylate, 2-ethylhexyl acrylate, methyl methacrylate, ethyl methacrylate, isopropyl methacrylate, n-butyl methacrylate, isobutyl methacrylate, n-hexyl methacrylate, cyclohexyl methacrylate, lauryl methacrylate, and glycidyl methacrylate;
(ii) unsaturated carboxylic acids such as acrylic acid, methacrylic acid, maleic acid, and itaconic acid, unsaturated amides such as acrylamide, N-methylol acrylamide, and diacetone acrylamide;
(iii) a vinyl monomer having a hydrolyzable silyl group such as vinyltrimethoxysilane, vinylmethyldimethoxysilane, and
   γ-(meth)acrylopropyltrimethoxysilane; and
(iv) other polymerizable monomers such as styrene, vinyl toluene, vinyl acetate, acrylonitrile, and dibutyl fumarate

As a specific method of manufacturing acrylic polyol, for example, acrylic polyol can be obtained by performing solution polymerization on the above monomer in the presence of a well-known radical polymerization initiator such as peroxide or an azo compound and diluting the resultant with an organic solvent, if necessary.

In the case where the paint composition according to the present embodiment includes a solvent having a high water content, the paint composition can be manufactured by a well-known method such as a method of performing solution polymerization on the above monomer and converting the resultant into an aqueous layer or the emulsion polymerization. In that case, it is possible to impart water solubility or water dispersibility to the acrylic polyol by neutralizing an acidic moiety of a carboxylic acid-containing monomer such as acrylic acid and methacrylic acid or a sulfonic acid-containing monomer with amine or ammonia.

### [Polyolefin polyol]

Examples of the polyolefin polyol include polybutadiene having two or more hydroxyl groups, hydrogenated polybutadiene having two or more hydroxyl groups, polyisoprene having two or more hydroxyl groups, and hydrogenated polyisoprene having two or more hydroxyl groups.

### [Fluorine polyol]

In the present specification, "fluorine polyol" means a polyol including fluorine in the molecule. Specific examples of the fluorine polyol include copolymers such as fluoroolefin, cyclovinyl ether, hydroxy alkyl vinyl ether, and monocarboxylic acid vinyl ester, disclosed in Japanese Unexamined Patent Application, First Publication No. S57-34107A and Japanese Unexamined Patent Application, First Publication No. S61-275311A.

### [Hydroxyl number and acid value of polyol]

The lower limit of the hydroxyl number of polyol is preferably 10 mgKOH/g, more preferably 20 mgKOH/g, and even more preferably 30 mgKOH/g.

The upper limit of the hydroxyl number of polyol is preferably 200 mgKOH/g, more preferably 180 mgKOH/g, and even more preferably 160 mgKOH/g.

That is, the hydroxyl number of polyol is preferably 10 mgKOH/g to 200 mgKOH/g, more preferably 20 mgKOH/g to 180 mgKOH/g, and even more preferably 30 mgKOH/g to 160 mgKOH/g.

In a case where the hydroxyl number of polyol is the lower limit or more, the solvent resistance of the crosslinked coating film obtained from the paint composition according to the present embodiment can be further improved.

In a case where the hydroxyl number of the polyol is the upper limit or less, the pot life after mixture with a polyisocyanate composition can be further improved.

Generally, the expression "pot life" means a time period during which, after a composition is prepared by mixing a main agent and a curing agent in a composition such as paint and adhesive, performance as a composition before curing is secured. It is also called "usable time".

The acid value of the polyol is preferably 0 mgKOH/g to 30 mgKOH/g.

The hydroxyl number and the acid value can be measured in conformity with JIS K1557.

The paint composition according to the present embodiment preferably includes the polyisocyanate composition according to the embodiment and at least one of acrylic polyol having a hydroxyl number of 10 mgKOH/g to 200 mgKOH/g or polyester polyol having a hydroxyl number of 10 mgKOH/g to 200 mgKOH/g.

### [NCO/OH]

The molar ratio (NCO/OH) of the isocyanate group of the polyisocyanate composition according to the embodiment of the present invention with respect to a hydroxyl group of the compound having two or more active hydrogen atoms in a molecule is preferably 0.2 to 5.0, more preferably 0.4 to 3.0, and even more preferably 0.5 to 2.0.

In a case where NCO/OH is the lower limit or more, there is a tendency for a stronger coating film to be obtained. Meanwhile, in a case where NCO/OH is the upper limit or less, there is a tendency for the smoothness of the coating film to be further improved.

### <Other additives>

In addition to the polyisocyanate composition and the resin component, the coating composition according to the present embodiment may contain a melamine-based curing agent such as a completely alkyl type, a methylol type alkyl, or an imino group type alkyl, if necessary.

Any of the compounds having two or more active hydrogen atoms in a molecule, the polyisocyanate composition according to the above embodiment, and the paint composition according to the present embodiment may contain an organic solvent.

The organic solvent is not particularly limited, but it is preferable not to have a functional group reactive with a hydroxyl group and an isocyanate group, and it is preferable to be sufficiently compatible with the polyisocyanate composition. These organic solvents are not limited to the following, but examples thereof include an ester compound, an ether compound, a ketone compound, an aromatic compound, an ethylene glycol dialkyl ether-based compound, a polyethylene glycol dicarboxylate-based compound, a hydrocarbon-based solvent, and an aromatic solvent, which are generally used as a paint solvent.

Any of the compounds having two or more active hydrogen atoms in a molecule, the polyisocyanate composition according to the above embodiment, and the paint composition according to the present embodiment may be used in a mixture with various additives that are used in the technical field such as a catalyst for accelerating curing, a pigment, a leveling agent, an antioxidant, an ultraviolet-absorbing agent, a light stabilizer, a plasticizer, and a surfactant, in a range that does not deteriorate a desired effect according to the present embodiment, according to purposes or applications.

### [Catalyst for accelerating curing]

The catalyst for acceleration of curing is not limited to the following, but examples thereof include metal salt and tertiary amines.

Examples of the metal salt include dibutyltin dilaurate, tin 2-ethylhexanoate, zinc 2-ethylhexanoate, and cobalt salt.

Examples of the tertiary amines include triethylamine, pyridine, methylpyridine, benzyldimethylamine, N,N-dimethylcyclohexylamine, N-methylpiperidine, pentamethyldiethylenetriamine, N,N'-endethylenepiperazine, and
N,N' -dimethylpiperazine.

### [Pigment]

Examples of the pigment include titanium oxide, carbon black, indigo, quinacridone, and pearl mica.

### [Leveling Agent]

The leveling agent is not particularly limited, but examples thereof include silicone, aerosil, wax, stearic acid salt, and polysiloxane.

### [Antioxidant, ultraviolet-absorbing agent, and light stabilizer]

Examples of an antioxidant, an ultraviolet-absorbing agent, and a light stabilizer include aliphatic, aromatic or alkyl-substituted aromatic esters of phosphoric acid or phosphorous acid, a hypophosphorous acid derivative, a phosphorus compound, a phenolic derivative (particularly, hindered phenol compound), a compound including sulfur, and a tin-based compound. These may be contained singly, or two or more kinds thereof may be contained.

Examples of the phosphorus compound include phenylphosphonic acid, phenylphosphinic acid, diphenylphosphonic acid, polyphosphonate, dialkylpentaerythritol diphosphite, dialkylbisphenol A diphosphite.

Examples of the compound including sulfur include a thioether-based compound, a dithioate-based compound, a mercaptobenzimidazole-based compound, a thiocarbanilide-based compound, and a thiodipropionate ester.

Examples of the tin compound include tin maleate and dibutyltin monoxide.

### [Plasticizer]

The plasticizer is not particularly limited, but examples thereof include phthalic acid esters, phosphoric acid esters, fatty acid esters, pyromellitic acid ester, an epoxy-based plasticizer, a polyether-based plasticizer, liquid rubber, and nonaromatic paraffin oil.

Examples of the phthalic acid esters include dioctyl phthalate, dibutyl phthalate, diethyl phthalate, butyl benzyl phthalate, di-2-ethylhexyl phthalate, diisodecyl phthalate, diundecyl phthalate, and diisononyl phthalate.

Examples of the phosphate esters include tricresyl phosphate, triethyl phosphate, tributyl phosphate, tri-2-ethylhexyl phosphate, trimethylhexyl phosphate, tris-chloroethyl phosphate, and tris-dichloropropyl phosphate.

Examples of the fatty acid esters include octyl trimellitate, isodecyl trimellitate, trimellitic esters, dipentaerythritol esters, dioctyl adipate, dimethyl adipate, di-2-ethylhexyl azelate, dioctyl azelate, dioctyl sebacate, di-2-ethylhexyl sebacate, and methyl acetyl ricinocate.

Examples of the pyromellitic acid ester include pyromellitic acid octyl ester.

Examples of the epoxy-based plasticizer include epoxidized soybean oil, epoxidized linseed oil, and epoxidized fatty acid alkyl ester.

Examples of the polyether-based plasticizer include adipic acid ether ester and polyether.

Examples of the liquid rubber include liquid NBR, liquid acrylic rubber, and liquid polybutadiene.

### [Surfactant]

Examples of the surfactant include a well-known anionic surfactant, a cationic surfactant, and an amphoteric surfactant.

### <Method of manufacturing paint composition>

The paint composition according to the present embodiment can be used for both solvent-based and water-based compositions.

In a case where the paint composition according to the present embodiment is a solvent-based paint composition, for example, first, the polyisocyanate composition according to the present embodiment is added, as the curing agent, to those obtained by adding other additives such as other resins, a catalyst, a pigment, a leveling agent, an antioxidant, an ultraviolet-absorbing agent, a light stabilizer, a plasticizer, and a surfactant to a resin containing a compound having two or more active hydrogen atoms in a molecule or a solvent dilution thereof, if necessary. Subsequently, if necessary, a solvent is further added to adjust the viscosity. Subsequently, a solvent-based paint composition can be obtained by hand stirring or stirring with a stirring device such as MAZELAR.

In a case where the paint composition according to the present embodiment is an aqueous paint composition, for example, first, the polyisocyanate composition according to the present embodiment is added, as the curing agent, to those obtained by adding other additives such as other resins, a catalyst, a pigment, a leveling agent, an antioxidant, an ultraviolet-absorbing agent, a light stabilizer, a plasticizer, and a surfactant to an aqueous dispersion or an aqueous substance of a resin containing a compound having two or more active hydrogen atoms in a molecule, if necessary. Subsequently, if necessary, water or a solvent is further added to adjust the viscosity. Subsequently, by forcibly stirring with a stirring device, an aqueous paint composition can be obtained.

### <Usage application of paint composition>

The paint composition according to the present embodiment is not limited to the following, but can be used, for example, as paint for roll coating, curtain flow coating, spray coating, bell coating, or electrostatic coating. For example, the paint composition is also useful as a primer or mid-intermediate coating for a material such as metal (steel plate, steel sheet, or surface-treated steel sheet), plastic, wood, a film, and an inorganic material. The paint composition is also useful as paint for imparting cosmetic properties, weather fastness, acid resistance properties, rust prevention, and chipping resistance to precoated metal, or automobile coating which includes rust prevention steel plates and steel sheets. The paint composition is also useful as a urethane raw material for an adhesive, a pressure-sensitive adhesive, an elastomer, a foam, or a surface treatment agent.

### «Coating film»

The coating film according to the present embodiment is obtained by curing the paint composition according to the above embodiment.

Since the coating film according to the present embodiment is obtained by curing the paint composition, the coating film always exhibits stable quality, has excellent coating film hardness, and has excellent water resistance and excellent base adhesiveness.

### <Method of manufacturing coating film>

The method of manufacturing the coating film according to the present embodiment is a method including a step of curing the paint composition according to the above embodiment.

The coating film according to the present embodiment can be manufactured by coating a material to be coated with the paint composition by using a well-known coating method such as roll coating, curtain flow coating, spray coating, bell coating, and electrostatic coating and then curing the paint composition.

Examples of the material to be coated include the materials exemplified in

### <Usage application of paint composition>.

### [Examples]

Hereinafter, the present embodiment is specifically described based on examples and comparative examples, but the present embodiment is not limited to the examples at all.

Respective physical properties of the polyisocyanate composition in examples and comparative examples were measured as below. Respective evaluations of the coating film were performed by the methods below. Unless particularly described, a "part" and "%" mean a "part by mass" and "mass%".

### <Method of measuring physical properties>

### [Physical property 1] Viscosity

The viscosity of a polyisocyanate composition as a sample was measured at 25°C by using an E-type viscometer (manufactured by Tokyo Keiki Inc.). For the measurement, a standard rotor (1°34' × R24) was used. The rotation speed was as below. The nonvolatile contents of the respective polyisocyanate compositions manufactured in the examples and the comparative examples described below were investigated by the method described in "[Physical Property 2]" described below and those having a value of 98 mass% or more were used for measurement.

### (Rotation speed)

100 rpm (in a case of less than 128 mPa·s)
50 rpm (in a case of 128 mPa·s or more and less than 256 mPa·s)
20 rpm (in a case of 256 mPa·s or more and less than 640 mPa·s)
10 rpm (in a case of 640 mPa·s or more and less than 1,280 mPa·s)
5.0 rpm (in a case of 1,280 mPa·s or more and less than 2,560 mPa·s)

### [Physical property 2] Nonvolatile content

The polyisocyanate composition was used as a sample, a mass of the aluminum cup was precisely weighed, about 1 g of the sample was introduced, and a mass of the cup before heat drying was precisely weighed. The cup containing the sample was heated in a dryer at 105°C for three hours. The cup after heating was cooled to room temperature, and the mass of the cup was precisely weighed again. Mass% of the dry residue in the sample was taken as the nonvolatile content. The calculation method of the nonvolatile content was as follows. In the case of no solvent dilution, the nonvolatile content was assumed to be substantially 100%.

Nonvolatile content (mass%) = (a mass of a cup after heat drying - a mass of an aluminum cup) / (a mass of a cup before heat drying - a mass of an aluminum cup) × 100%

### [Physical property 3] Isocyanate group content ratio (NCO content ratio)

The isocyanate group content ratio (NCO content ratio) (mass%) was obtained by back titration with IN hydrochloric acid after the isocyanate groups in each polyisocyanate composition were neutralized with an excess of 2N amine. The nonvolatile contents of the respective polyisocyanate compositions were investigated by the above method, and those having a value of 98 mass% or more were measured without change.

### [Physical Property 4] HDI monomer mass concentration

First, a 20-mL sample bottle was placed on a digital balance, and about 1 g of the polyisocyanate composition as a sample was precisely weighed. Subsequently, 0.03 g to 0.04 g of nitrobenzene (internal standard solution) was added and precisely weighed. About 9 mL of ethyl acetate was added, the mixture was mixed well with the lid tightly closed, and the sample was prepared. Gas chromatography analysis was performed on the above prepared liquid under the following conditions so as to weigh the HDI monomer in the sample.

### (Measurement condition)

Device: GC-8A manufactured by Shimadzu Corporation
Column: Silicone OV-17 manufactured by Shinwa Chemical Industries Ltd.
Column oven temperature: 120°C
Injection / detector temperature: 160°C

### [Physical Property 5] Molar ratio of various functional groups in polyisocyanate composition

### (1) Measurement of molar ratio of various functional groups

¹H-NMR, ¹³C-NMR using the Biospin Avance 600 (trade name) manufactured by Bruker Corporation were measured, so as to obtain molar ratios of the group (I) / (the isocyanurate group + the uretdione group + the group (I)), the uretdione group / the isocyanurate group, and the allophanate group / the isocyanurate group. Specific measurement conditions were as follows.

### (Measurement conditions of ¹H-NMR device)

¹H-NMR device: AVANCE 600 (manufactured by Bruker Corporation) Cryoprobe (manufactured by Bruker Corporation)
Cryo Probe (295K)
Resonance frequency: 600 MHz
Concentration: 5 wt/vol%
Shift criteria: CDCl₃ (7.26 ppm)
Number of integrations: 256 times
Pulse program: zg30
Pulse waiting time: 1.0 sec

In the above measurement, the integral value of the following signals was divided by the number of carbons being measured and each molar ratio was determined from the value. The ratio of the integral values of the following signals was taken as a molar ratio.
Isocyanurate structure: Integral value around 3.8 ppm / 6
Allophanate structure: Integral value around 8.5 ppm /1

### (Measurement conditions of ¹³C-NMR device)

¹³C-NMR device: AVANCE 600 (manufactured by Bruker Corporation)
Cryoprobe (manufactured by Bruker Corporation)
Cryo Probe (295K)
Resonance frequency: 150MHz
Concentration: 60 wt/vol%
Shift criteria: CDCl₃ (77 ppm)
Number of integrations: 10,000 times
Pulse program: zgpg 30 (proton complete decoupling method)
Pulse wait time: 2 sec

In the above measurement, the integral value of the following signals was divided by the number of carbons being measured and each molar ratio was determined from the value. The ratio of the integral values of the following signals was taken as a molar ratio.
Isocyanurate group: Integral value around 148.6 ppm / 3
Uretdione group: Integral value around 157.5 ppm /2
Sum of the allophanate group + the group (I): Integral value around 154 ppm /1

### (2) Calculation of molar ratio of group (I) / (isocyanurate group + uretdione group + group (I))

The group (I) / the isocyanurate group was calculated by subtracting (the integral value around 8.5 ppm /1) / (the integral value around 3.8 ppm / 6) obtained by ¹H-NMR from (the integral value around 154 ppm / 1) / (the integral value around 148.6 ppm / 3) obtained by ¹³C-NMR, so as to calculate the group (I) / the isocyanurate group. Subsequently, the molar ratio of the group (I) was calculated by multiplying this by (the integral value around 148.6 ppm / 3). Subsequently, the molar ratio of the group (I) / (the isocyanurate group + the uretdione group + the group (I)) was calculated by calculating (the calculated molar ratio of the group (I)) / {(the integral value around 148.6 ppm / 3) + (the integral value around 157.5 ppm / 2) + (the calculated molar ratio of the group (I))}.

### (3) Calculation of molar ratio of uretdione group / isocyanurate group

The calculation was performed from the molar ratio of (the integral value around 157.5 ppm / 2) / (the integral value around 148.6 ppm / 3) obtained from ¹³C-NMR

### (4) Calculation of molar ratio of allophanate group / isocyanurate group

The calculation was performed from the molar ratio of (the integral value around 8.5 ppm / 1) / (the integral value around 3.8 ppm / 6) obtained from ¹H-NMR

### <Method of evaluating coating film>

### [Manufacturing paint composition]

The paint composition was manufactured with each polyisocyanate composition as follows.

Specifically, first, acrylic polyol (trade name manufactured by Allnex Holding S.à.r.l., Setalux 1903, resin concentration of solid content of 75%, hydroxyl number of 150 mgKOH/resin g) and the polyisocyanate composition were formulated such that an equivalent ratio of a hydroxyl group to an isocyanate group was 1 : 1. Thereafter, the paint viscosity was adjusted to 20 seconds with Ford cup No. 4 by using butyl acetate so as to obtain each paint composition.

### [Evaluation 1] Coating film hardness

A glass plate was coated with each paint composition such that the dry film thickness was 30 µm and was left at room temperature for 15 minutes, and the paint composition was cured in an oven at 60°C for 180 minutes so as to obtain a coating film. After cooling at room temperature, the coating film hardness of this coating film was measured in conformity with ISO 1522-2007. As the evaluation standard, the case where the Konig hardness was 60 or more was evaluated as A, the case where the Konig hardness was 40 or more and less than 60 was evaluated as B, and the case where the Konig hardness was less than 40 was evaluated as C.

### [Evaluation 2] Water resistance

A glass plate was coated with each paint composition such that the dry film thickness was 30 µm and was left at room temperature for 15 minutes, and the paint composition was cured in an oven at 60°C for 120 minutes so as to obtain a coating film. After cooling at room temperature, the coating film was maintained under the conditions of 60°C and the humidity of 87% for 72 hours. Thereafter, the coating film was left at room temperature for 60 minutes, and the coating film after the test was visually observed. As the evaluation standard, the case where whitening and spots were not observed was evaluated as A, the case where whitening and spots were partially observed was evaluated as B, and the case where whitening and spots were observed in several positions was evaluated as C.

### [Evaluation 3] Base adhesiveness

A mild steel plate was coated with acrylic polyol (concentration of solid content of resin: 55%, hydroxyl number: 30 mgKOH/resin g) such that a resin film thickness was 40 µm and left at 60°C for 30 minutes so as to form a coating film 1. Thereafter, the coating film 1 was coated with each coating composition such that the resin film thickness was 30 µm. The resultant was left at room temperature for 15 minutes, and the coating composition was cured in an oven at 90°C for 30 minutes to obtain a coating film 2. After cooling at room temperature, an adhesiveness test of the coating films 1 and 2 was performed in conformity with JIS K5600-5-6. As the evaluation standard, those having no peeled coating film and no floating or those having only partial floating in the cut part were evaluated as A, and those having peeled parts as C.

### <Manufacturing of polyisocyanate composition>

### [Example 1] Manufacturing of polyisocyanate composition P-1

A four-necked flask equipped with a stirrer, a thermometer, a reflux cooling pipe, a nitrogen-blowing tube, and a dropping funnel was placed in a nitrogen atmosphere, 6,000 g of HDI and 7.0 g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 45.2 mass%, phosphoric acid was added to stop the reaction. The uretdione dimer concentration increase in this reaction was 1 mass% or less. The reaction solution was further maintained at 150°C for one hour. A urethodione group was formed by this heating (the reaction solution obtained here is referred to as a "reaction solution X1").

Independently from the above, a four-necked flask equipped with a stirrer, a thermometer, a reflux cooling pipe, a nitrogen-blowing tube, and a dropping funnel was placed in a nitrogen atmosphere, 3.6 g of hexamethyldisilazane and 1.8 g of n-butanol were added, and the mixture was stirred at 80°C for one hour. Thereafter, 160 g of HDI was added, the temperature was raised to 160°C, and the mixture was stirred for two hours, so as to perform a biuret formation reaction. The NCO content ratio of the reaction solution was measured and was 48.7 mass% (the reaction solution obtained here is referred to as a "reaction solution Y1").

After the reaction solution X1 and the reaction solution Y1 were mixed with each other, purification was performed twice with a thin film evaporator under conditions of 160°C and 0.2 Torr, so as to obtain a polyisocyanate composition P-1 having a nonvolatile content of 99.5 mass%, a viscosity of 520 mPa·s (25°C), a NCO content ratio of 23.1 mass%, and a HDI monomer concentration of 0.11 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 1. In Table 1, "A" is a molar amount of the group (I), "B" is a molar amount of the isocyanurate group, "C" is a molar amount of the uretdione group, and "D" is a molar amount of the allophanate group.

Thereafter, the paint composition and the coating film were manufactured using the polyisocyanate composition obtained by the above method, so as to evaluate the coating film hardness, the water resistance, and the base adhesiveness. The obtained results are presented in Table 1.

### [Example 2] Manufacturing of polyisocyanate composition P-2

The polyisocyanate composition P-2 was manufactured by the same method as in Example 1 except that the reaction solution Y2 was used instead of the reaction solution Y1.

As the method of manufacturing the reaction solution Y2, a four-necked flask equipped with a stirrer, a thermometer, a reflux cooling pipe, a nitrogen-blowing tube, and a dropping funnel was placed in a nitrogen atmosphere, 5.9 g of hexamethyldisilazane and 3.0 g of n-butanol g were added, and the mixture was stirred at 80°C for one hour. Thereafter, 300 g of HDI was added, the temperature was raised to 160°C, the mixture was stirred for two hours, and the biuret formation reaction was performed, so as to obtain the reaction solution Y2. The NCO content ratio of the reaction solution Y2 was measured and was 48.7 mass%.

After the reaction solution X1 and the reaction solution Y2 were mixed with each other, purification was performed twice with a thin film evaporator under conditions of 160°C and 0.2 Torr, so as to obtain the polyisocyanate composition P-2 having a nonvolatile content of 99.4 mass%, a viscosity of 510 mPa·s (25°C), a NCO content ratio of 23.1 mass%, and a HDI monomer concentration of 0.12 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 1.

Thereafter, the paint composition and the coating film were manufactured using the polyisocyanate composition obtained by the above method, so as to evaluate the coating film hardness, the water resistance, and the base adhesiveness. The obtained results are presented in Table 1.

### [Example 3] Manufacturing of polyisocyanate composition P-3

The polyisocyanate composition P-3 was manufactured by the same method as in Example 1 except that a reaction solution Y3 was used instead of the reaction solution Y1.

As the method of manufacturing the reaction solution Y3, a four-necked flask equipped with a stirrer, a thermometer, a reflux cooling pipe, a nitrogen-blowing tube, and a dropping funnel was placed in a nitrogen atmosphere, 15.1 g of hexamethyldisilazane and 7.6 g of n-butanol g were added, and the mixture was stirred at 80°C for one hour. Thereafter, 650 g of HDI was added, the temperature was raised to 160°C, the mixture was stirred for two hours, and the biuret formation reaction was performed, so as to obtain the reaction solution Y3. The NCO content ratio of the reaction solution Y3 was measured and was 48.7 mass%.

After the reaction solution X1 and the reaction solution Y3 were mixed, the purification was performed twice with a thin film evaporator under conditions of 160°C and 0.2 Torr, so as to obtain the polyisocyanate composition P-3 having a nonvolatile content of 99.4 mass%, a viscosity of 500 mPa·s (25°C), a NCO content ratio of 23.1 mass%, and a HDI monomer concentration of 0.11 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 1.

Thereafter, the paint composition and the coating film were manufactured using the polyisocyanate composition obtained by the above method, so as to evaluate the coating film hardness, the water resistance, and the base adhesiveness. The obtained results are presented in Table 1.

### [Example 4] Manufacturing of polyisocyanate composition P-4

The polyisocyanate composition P-4 was manufactured by the same method as in Example 1 except that a reaction solution Y4 was used instead of the reaction solution Y1.

As the method of manufacturing the reaction solution Y4, a four-necked flask equipped with a stirrer, a thermometer, a reflux cooling pipe, a nitrogen-blowing tube, and a dropping funnel was placed in a nitrogen atmosphere, 31.9 g of hexamethyldisilazane and 16.0 g of n-butanol g were added, and the mixture was stirred at 80°C for one hour. Thereafter, 1,370 g of HDI was added, the temperature was raised to 160°C, the mixture was stirred for two hours, and the biuret formation reaction was performed, so as to obtain the reaction solution Y4. The NCO content ratio of the reaction solution Y4 was measured and was 48.7 mass%.

After the reaction solution X1 and the reaction solution Y4 were mixed, the purification was performed twice with a thin film evaporator under conditions of 160°C and 0.2 Torr, so as to obtain the polyisocyanate composition P-4 having a nonvolatile content of 99.4 mass%, a viscosity of 500 mPa·s (25°C), a NCO content ratio of 23.0 mass%, and a HDI monomer concentration of 0.11 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 1.

Thereafter, the paint composition and the coating film were manufactured using the polyisocyanate composition obtained by the above method, so as to evaluate the coating film hardness, the water resistance, and the base adhesiveness. The obtained results are presented in Table 1.

### [Example 5] Manufacturing of polyisocyanate composition P-5

A four-necked flask equipped with a stirrer, a thermometer, a reflux cooling pipe, a nitrogen-blowing tube, and a dropping funnel was placed in a nitrogen atmosphere, 6,000 g of HDI and 7.0 g of isobutanol were introduced, and the temperature inside the reactor was maintained at 80°C for two hours under stirring. Thereafter, to 5.0 g of a solution obtained by diluting an isocyanurate-forming catalyst, trimethyl-2-methyl-2-hydroxyethylammonium hydroxide with 5 mass% of isobutanol was added so as to perform the isocyanurate formation reaction. Subsequently, in a case where the NCO content ratio of the reaction solution was 45.9 mass%, phosphoric acid was added to stop the reaction. The uretdione dimer concentration increase in this reaction was 1 mass% or less. The reaction solution was further maintained at 150°C for one hour. A urethodione group was formed by this heating (the reaction solution obtained here is referred to as a "reaction solution X2").

Independently from the above, a four-necked flask equipped with a stirrer, a thermometer, a reflux cooling pipe, a nitrogen-blowing tube, and a dropping funnel was placed in a nitrogen atmosphere, 11.4 g of hexamethyldisilazane and 5.7 g of n-butanol were added, and the mixture was stirred at 80°C for one hour. Thereafter, 490 g of HDI was added, the temperature was raised to 160°C, and the mixture was stirred for two hours, so as to perform a biuret formation reaction. The NCO content ratio of the reaction solution was measured and was 48.7 mass% (the reaction solution obtained here is referred to as a "reaction solution Y5").

After the reaction solution X2 and the reaction solution Y5 were mixed with each other, purification was performed twice with a thin film evaporator under conditions of 160°C and 0.2 Torr, a nonvolatile content of 99.5 mass%, so as to obtain a polyisocyanate composition P-5 having a viscosity of 320 mPa·s(25°C), a NCO content ratio of 23.4 mass%, a HDI monomer concentration of 0.13 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 1.

Thereafter, the paint composition and the coating film were manufactured using the polyisocyanate composition obtained by the above method, so as to evaluate the coating film hardness, the water resistance, and the base adhesiveness. The obtained results are presented in Table 1.

### [Example 6] Manufacturing of polyisocyanate composition P-6

A four-necked flask equipped with a stirrer, a thermometer, a reflux cooling pipe, a nitrogen-blowing tube, and a dropping funnel was placed in a nitrogen atmosphere, 6,000 g of HDI and 7.0 g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 43.2 mass%, phosphoric acid was added to stop the reaction. The uretdione dimer concentration increase in this reaction was 1 mass% or less. The reaction solution was further maintained at 150°C for one hour. A urethodione group was formed by this heating (the reaction solution obtained here is referred to as a "reaction solution X3").

Independently from the above, a four-necked flask equipped with a stirrer, a thermometer, a reflux cooling pipe, a nitrogen-blowing tube, and a dropping funnel was placed in a nitrogen atmosphere, 17.4 g of hexamethyldisilazane and 8.7 g of n-butanol were added, and the mixture was stirred at 80°C for one hour. Thereafter, 750 g of HDI was added, the temperature was raised to 160°C, and the mixture was stirred for two hours, so as to perform a biuret formation reaction. The NCO content ratio of the reaction solution was measured and was 48.7 mass% (the reaction solution obtained here is referred to as a "reaction solution Y6").

After the reaction solution X3 and the reaction solution Y6 were mixed with each other, the purification was performed twice with a thin film evaporator under conditions of 160°C and 0.2 Torr, so as to obtain a polyisocyanate composition P-6 having a nonvolatile content of 99.5 mass%, a viscosity of 1,030 mPa·s (25°C), a NCO content ratio of 23.2 mass%, and a HDI monomer concentration of 0.10 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 1.

Thereafter, the paint composition and the coating film were manufactured using the polyisocyanate composition obtained by the above method, so as to evaluate the coating film hardness, the water resistance, and the base adhesiveness. The obtained results are presented in Table 1.

### [Example 7] Manufacturing of polyisocyanate composition P-7

A four-necked flask equipped with a stirrer, a thermometer, a reflux cooling pipe, a nitrogen-blowing tube, and a dropping funnel was placed in a nitrogen atmosphere, 6,000 g of HDI and 7.0 g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 46.5 mass%, phosphoric acid was added to stop the reaction (the reaction solution obtained here is referred to as a "reaction solution X4").

Independently from the above, a four-necked flask equipped with a stirrer, a thermometer, a reflux cooling pipe, a nitrogen-blowing tube, and a dropping funnel was placed in a nitrogen atmosphere, 8.2 g of hexamethyldisilazane and 4.1g of n-butanol were added, and the mixture was stirred at 80°C for one hour. Thereafter, 360 g of HDI was added, the temperature was raised to 160°C, and the mixture was stirred for two hours, so as to perform a biuret formation reaction. The NCO content ratio of the reaction solution was measured and was 48.7 mass% (the reaction solution obtained here is referred to as a "reaction solution Y7").

After the reaction solution X4 and the reaction solution Y7 were mixed with each other, the purification was performed twice with a thin film evaporator under conditions of 160°C and 0.2 Torr, so as to obtain a polyisocyanate composition P-7 having a nonvolatile content of 99.4 mass%, a viscosity of 530 mPa·s (25°C), a NCO content ratio of 23.3 mass%, and a HDI monomer concentration of 0.14 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 1.

Thereafter, the paint composition and the coating film were manufactured using the polyisocyanate composition obtained by the above method, so as to evaluate the coating film hardness, the water resistance, and the base adhesiveness. The obtained results are presented in Table 1.

### [Example 8] Manufacturing of polyisocyanate composition P-8

A four-necked flask equipped with a stirrer, a thermometer, a reflux cooling pipe, a nitrogen-blowing tube, and a dropping funnel was placed in a nitrogen atmosphere, 6,000 g of HDI and 19.0 g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 43.0 mass%, phosphoric acid was added to stop the reaction. The reaction solution was maintained at 150°C for one hour. A urethodione group was formed by this heating (the reaction solution obtained here is referred to as a "reaction solution X5").

Independently from the above, a four-necked flask equipped with a stirrer, a thermometer, a reflux cooling pipe, a nitrogen-blowing tube, and a dropping funnel was placed in a nitrogen atmosphere, 15.6 g of hexamethyldisilazane and 7.8 g of n-butanol were added, and the mixture was stirred at 80°C for one hour. Thereafter, 690 g of HDI was added, the temperature was raised to 160°C, and the mixture was stirred for two hours, so as to perform a biuret formation reaction. The NCO content ratio of the reaction solution was measured and was 48.7 mass% (the reaction solution obtained here is referred to as a "reaction solution Y8").

After the reaction solution X5 and the reaction solution Y8 were mixed with each other, the purification was performed twice with a thin film evaporator under conditions of 160°C and 0.2 Torr, so as to obtain a polyisocyanate composition P-8 having a nonvolatile content of 99.3 mass%, a viscosity of 480 mPa·s (25°C), a NCO content ratio of 22.2 mass%, and a HDI monomer concentration of 0.09 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 1.

Thereafter, the paint composition and the coating film were manufactured using the polyisocyanate composition obtained by the above method, so as to evaluate the coating film hardness, the water resistance, and the base adhesiveness. The obtained results are presented in Table 1.

### [Example 9] Manufacturing of polyisocyanate composition P-9

A four-necked flask equipped with a stirrer, a thermometer, a reflux cooling pipe, a nitrogen-blowing tube, and a dropping funnel was placed in a nitrogen atmosphere, 6,000 g of HDI and 4.5 g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 46.7 mass%, phosphoric acid was added to stop the reaction. The uretdione dimer concentration increase in this reaction was 1 mass% or less. The reaction solution was maintained at 160°C for one hour (the reaction solution obtained here is referred to as a "reaction solution X6").

Independently from the above, a four-necked flask equipped with a stirrer, a thermometer, a reflux cooling pipe, a nitrogen-blowing tube, and a dropping funnel was placed in a nitrogen atmosphere, 8.4 g of hexamethyldisilazane and 4.1 g of n-butanol were added, and the mixture was stirred at 80°C for one hour. Thereafter, 370 g of HDI was added, the temperature was raised to 160°C, and the mixture was stirred for two hours, so as to perform a biuret formation reaction. The NCO content ratio of the reaction solution was measured and was 48.7 mass% (the reaction solution obtained here is referred to as a "reaction solution Y9").

After the reaction solution X6 and the reaction solution Y9 were mixed with each other, the purification was performed twice with a thin film evaporator under conditions of 160°C and 0.2 Torr, so as to obtain a polyisocyanate composition P-9 having a nonvolatile content of 99.5 mass%, a viscosity of 270 mPa·s (25°C), a NCO content ratio of 22.9 mass%, and a HDI monomer concentration of 0.14 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 1.

Thereafter, the paint composition and the coating film were manufactured using the polyisocyanate composition obtained by the above method, so as to evaluate the coating film hardness, the water resistance, and the base adhesiveness. The obtained results are presented in Table 1.

### [Example 10] Manufacturing of polyisocyanate composition P-10

A four-necked flask equipped with a stirrer, a thermometer, a reflux cooling pipe, a nitrogen-blowing tube, and a dropping funnel was placed in a nitrogen atmosphere, 6,000 g of HDI was introduced, and the temperature inside the reactor was maintained at 160°C for 1.5 hours under stirring. The temperature was cooled to 140°C, 36 g of hexamethyldisilazane was added, and the mixture was maintained for 30 minutes. Thereafter, the temperature was cooled to 90°C, 18 g of n-butanol was added, and the mixture was maintained for 30 minutes. Thereafter, the temperature was raised to 160°C, and the mixture was maintained for two hours. The obtained reaction solution was purified twice with a thin film evaporator under conditions of 160°C and 0.2 Torr, so as to obtain a polyisocyanate composition P-10 having a nonvolatile content of 99.5 mass%, a viscosity of 500 mPa·s (25°C), a NCO content ratio of 23.0 mass%, and a HDI monomer concentration of 0.12 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 1.

Thereafter, the paint composition and the coating film were manufactured using the polyisocyanate composition obtained by the above method, so as to evaluate the coating film hardness, the water resistance, and the base adhesiveness. The obtained results are presented in Table 1.

### [Example 11] Manufacturing of polyisocyanate composition P-16 (for reference)

The manufacturing was performed in the same manner as in Example 1 except that the reaction solution Y1 was changed as follows.

Independently from the above, a four-necked flask equipped with a stirrer, a thermometer, a reflux cooling pipe, a nitrogen-blowing tube, and a dropping funnel was placed in a nitrogen atmosphere, 54.7 g of hexamethyldisilazane and 27.3 g of n-butanol were added, and the mixture was stirred at 80°C for one hour. Thereafter, 2,350 g of HDI was added, the temperature was raised to 160°C, and the biuret formation reaction was performed. The NCO content ratio of the reaction solution was measured and was 48.7 mass%. (Reaction solution Y16)

After the reaction solution X1 and the reaction solution Y16 were mixed with each other, the purification was performed twice with a thin film evaporator under conditions of 160°C and 0.2 Torr, so as to obtain a polyisocyanate composition P-16 having a nonvolatile content of 99.4 mass%, a viscosity of 480 mPa·s (25°C), a NCO content ratio of 22.9 mass%, and a HDI monomer concentration of 0.12 mass%.

The following measurement and evaluation were performed in the same manner as in Example 1. The obtained results are presented in Table 2.

### [Comparative Example 1] Manufacturing of polyisocyanate composition P-11

A four-necked flask equipped with a stirrer, a thermometer, a reflux cooling pipe, a nitrogen-blowing tube, and a dropping funnel was placed in a nitrogen atmosphere, 6,000 g of HDI and 60.0 g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added so as to perform the isocyanurate formation reaction. Subsequently, in a case where the NCO content ratio of the reaction solution was 41.3 mass%, phosphoric acid was added to stop the reaction. The obtained reaction solution was purified twice with a thin film evaporator under conditions of 160°C and 0.2 Torr, so as to obtain a polyisocyanate composition P-11 having a nonvolatile content of 99.4 mass%, a viscosity of 460 mPa·s (25°C), a NCO content ratio of 21.1 mass%, and a HDI monomer concentration of 0.09 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 2.

Thereafter, the paint composition and the coating film were manufactured using the polyisocyanate composition obtained by the above method, so as to evaluate the coating film hardness, the water resistance, and the base adhesiveness. The obtained results are presented in Table 2.

### [Comparative Example 2] Manufacturing of polyisocyanate composition P-12

A polyisocyanate composition P-12 was manufactured by the same method as in Example 1 except that the reaction solution X6 obtained in Example 9 was purified twice with a thin film evaporator under conditions of 160°C and 0.2 Torr and was used instead of the reaction solution X1. The obtained polyisocyanate composition P-12 had a nonvolatile content of 99.5 mass%, a viscosity of 290 mPa·s (25°C), a NCO content ratio of 23.0 mass%, and a HDI monomer concentration of 0.11 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 2.

Thereafter, the paint composition and the coating film were manufactured using the polyisocyanate composition obtained by the above method, so as to evaluate the coating film hardness, the water resistance, and the base adhesiveness. The obtained results are presented in Table 2.

### [Comparative Example 3] Manufacturing of polyisocyanate composition P-13

A polyisocyanate composition P-13 was manufactured by the same method as in Example 1 except that the reaction solution X1 obtained in Example 1 was purified twice with a thin film evaporator under conditions of 160°C and 0.2 Torr. The obtained polyisocyanate composition P-13 had a nonvolatile content of 99.5 mass%, a viscosity of 520 mPa·s (25°C), a NCO content ratio of 23.2 mass%, and a HDI monomer concentration of 0.11 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 2.

Thereafter, the paint composition and the coating film were manufactured using the polyisocyanate composition obtained by the above method, so as to evaluate the coating film hardness, the water resistance, and the base adhesiveness. The obtained results are presented in Table 2.

[Comparative Example 4] Manufacturing of polyisocyanate composition P-14

A four-necked flask equipped with a stirrer, a thermometer, a reflux cooling pipe, a nitrogen-blowing tube, and a dropping funnel was placed in a nitrogen atmosphere, 6,000 g of HDI was introduced, and the temperature inside the reactor was maintained at 160°C for 1.5 hours under stirring. The temperature was cooled to 140°C, 36 g of hexamethyldisilazane was added, and the mixture was maintained for 30 minutes. Thereafter, the temperature was cooled to 90°C, 18 g of n-butanol was added, and the mixture was maintained for 30 minutes. The obtained reaction solution was purified twice with a thin film evaporator under conditions of 160°C and 0.2 Torr, so as to obtain a polyisocyanate composition P-14 having a nonvolatile content of 99.5 mass%, a viscosity of 510 mPa·s (25°C), a NCO content ratio of 23.2 mass%, and a HDI monomer concentration of 0.12 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 2.

Thereafter, the paint composition and the coating film were manufactured using the polyisocyanate composition obtained by the above method, so as to evaluate the coating film hardness, the water resistance, and the base adhesiveness. The obtained results are presented in Table 2.

### [Comparative Example 5] Manufacturing of polyisocyanate composition P-15

0.8 g of dimethyldimethoxysilane (trade name "KBM-22" manufactured by Shin-Etsu Chemical Co., Ltd.) was added to 100 g of the polyisocyanate composition P-13 obtained in Comparative Example 3, so as to obtain a polyisocyanate composition P-15 having a nonvolatile content of 99.5 mass%, a viscosity of 500 mPa·s (25°C), a NCO content ratio of 23.1 mass%, and a HDI monomer concentration of 0.11 mass%.

By ¹H-NMR and ¹³C-NMR measurement, a molar ratio of the group (I) / (the isocyanurate group + the uretdione group + the group (I)), a molar ratio of the uretdione group / the isocyanurate group, and a molar ratio of the allophanate group / the isocyanurate group were measured. The obtained results are presented in Table 1. In Table 2, "*1" indicates dimethylmethoxysilane (trade name "KBM-22" manufactured by Shin-Etsu Chemical Co., Ltd.).

Thereafter, the paint composition and the coating film were manufactured using the polyisocyanate composition obtained by the above method, so as to evaluate the coating film hardness, the water resistance, and the base adhesiveness. The obtained results are presented in Table 2.

**[Table 1]**

| | | Example 1 | Example 2 | Example 3 | Example 4 | Example 5 | Example 6 | Example 7 | Example 8 | Example 9 | Example 10 | Example 11 (*) |
|---|---|---|---|---|---|---|---|---|---|---|---|---|
| Polyisocyanate composition | | P-1 | P-2 | P-3 | P-4 | P-5 | P-6 | P-7 | P-8 | P-9 | P-10 | P-16 |
| Physical properties | Molar ratio of A/(A + B + C) | 0.008 | 0.015 | 0.033 | 0.07 | 0.032 | 0.032 | 0.033 | 0.032 | 0.032 | 0.08 | 0.12 |
| | Molar ratio of C/ B | 0.32 | 0.33 | 0.37 | 0.29 | 0.41 | 0.14 | 0.02 | 0.33 | 0.58 | 0.30 | 0.33 |
| | Molar ratio of D / B | 0.07 | 0.07 | 0.07 | 0.07 | 0.11 | 0.04 | 0.07 | 0.18 | 0.07 | 0.03 | 0.07 |
| | Other Si compounds | - | - | - | - | - | - | - | - | - | - | - |
| | Viscosity (mPa·s/25°C) | 520 | 510 | 500 | 500 | 320 | 1030 | 530 | 480 | 270 | 500 | 480 |
| | NCO content ratio (mass%) | 23.1 | 23.1 | 23.1 | 23.0 | 23.4 | 23.2 | 23.3 | 22.2 | 22.9 | 23.0 | 22.9 |
| Evaluation | Coating film hardness | A | A | A | B | B | A | A | B | B | B | B |
| | Water resistance | B | A | A | B | A | B | B | B | B | B | A |
| | Adhesiveness to base coating film | B | B | B | B | B | B | B | B | B | B | C |

| | | | | | | | | | | | | |
|---|---|---|---|---|---|---|---|---|---|---|---|---|
| * note: Example 11 for reference, not according to the invention | | | | | | | | | | | | |

**[Table 2]**

| | | Comparative Example 1 | Comparative Example 2 | Comparative Example 3 | Comparative Example 4 | Comparative Example 5 |
|---|---|---|---|---|---|---|
| Polyisocyanate composition | | p-11 | P-12 | P-13 | P-14 | P-15 |
| Physical properties | Molar ratio of A /(A + B + C) | Less than 0.005 | Less than 0.005 | Less than 0.005 | Less than 0.005 | Less than 0.005 |
| | Molar ratio of C / B | Less than 0.01 | 0.58 | 0.32 | 0.30 | 0.33 |
| | Molar ratio of D / B | 0.35 | 0.07 | 0.07 | Less than 0.01 | 0.07 |
| | Other Si compounds | - | - | - | - | *1 |
| | Viscosity (mPa·s/25°C) | 460 | 290 | 520 | 510 | 500 |
| | NCO content ratio (mass%) | 21.1 | 23.0 | 23.2 | 23.2 | 23.1 |
| Evaluation | Coating film hardness | C | B | A | A | A |
| | Water resistance | C | C | C | C | C |
| | Adhesiveness to base coating film | B | B | B | B | B |

From Table 1, it was confirmed that the polyisocyanate compositions P-1 to P-10 (Examples 1 to 10) and P-16 (Example 11) have a low viscosity and it was possible to form a coating film having excellent hardness and excellent water resistance.

Meanwhile, from the Table 2, it was confirmed that the polyisocyanate compositions P-11 to P-15 (Comparative Example 1 to 5) did not have the group (I) but were not able to form a coating film having a low viscosity and having both excellent hardness and excellent water resistance.

### INDUSTRIAL APPLICABILITY

The polyisocyanate composition according to the present embodiment had low viscosity and a coating film having excellent hardness and excellent water resistance can be formed. The paint composition according to the present embodiment can be used as a paint for roll coating, curtain flow coating, spray coating, bell coating, and electrostatic coating, as the curing agent component. The paint composition according to the present embodiment can be used as a primer or mid-intermediate coating for a material such as metal for a steel plate, a steel sheet, a surface-treated steel sheet, plastic, wood, a film, and an inorganic material. The paint composition according to the present embodiment is also useful as paint for imparting heat resistance, cosmetic properties (surface smoothness and sharpness) to precoated metal, or automobile coating which includes rust prevention steel plates and steel sheets. The paint composition according to the present embodiment is also useful as a urethane raw material for an adhesive, a pressure-sensitive adhesive, an elastomer, a foam, or a surface treatment agent. In a case where the paint composition according to the present embodiment is an aqueous paint composition, since the VOC content can be reduced, the paint composition can be used in a wide variety of fields as a raw material such as a water-based plastic paint or a water-based automotive paint.

## Claims

1. A polyisocyanate composition that is obtained from an aliphatic diisocyanate including 1,6-diisocyanatohexane, the composition comprising:
an isocyanurate group;
a uretdione group; and
a group represented by Formula (I),
wherein a viscosity measured at 25°C is 200 mPa·s to 2,000 mPa·s, and
in the polyisocyanate composition, a ratio of a molar amount of the group represented by Formula (I) with respect to a total molar amount of the isocyanurate group, the uretdione group, and the group represented by Formula (I) is 0.005 to 0.10; 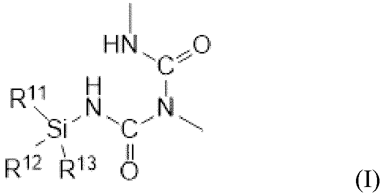 wherein in Formula (I), R¹¹, R¹², and R¹³ each independently represents a hydrogen atom or a hydrocarbon group having 1 to 20 carbon atoms that may include at least any one of an ester group and an ether group.

2. A paint composition, comprising:
the polyisocyanate composition according defined Claim 1; and
at least a polyol of an acrylic polyol and a polyester polyol.

3. A method of manufacturing a coating film, comprising:
a step of curing the paint composition defined in Claim 2.

4. A coating film obtained by curing the paint composition defined in Claim 2.

## Patentansprüche

1. Polyisocyanat-Zusammensetzung, die aus einem aliphatischen Diisocyanat einschließlich 1,6-Diisocyanatohexan erhalten wird, wobei die Zusammensetzung umfasst:
eine Isocyanuratgruppe;
eine Uretdiongruppe; und
eine Gruppe der Formel (I),
wobei eine bei 25°C gemessene Viskosität 200 mPa·s bis 2.000 mPa·s beträgt und
in der Polyisocyanat-Zusammensetzung ein Verhältnis der molaren Menge der Gruppe der Formel (I) in Bezug auf die gesamte molare Menge der Isocyanuratgruppe, der Uretdiongruppe und der Gruppe der Formel (I) 0,005 bis 0,10 beträgt; 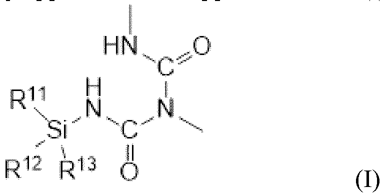 wobei in Formel (I) R¹¹, R¹² und R¹³ jeweils unabhängig voneinander ein Wasserstoffatom oder eine Kohlenwasserstoffgruppe mit 1 bis 20 Kohlenstoffatomen darstellen, die mindestens eine von einer Estergruppe und einer Ethergruppe umfassen kann.

2. Anstrich-/Lackzusammensetzung, umfassend:
die Polyisocyanat-Zusammensetzung nach Anspruch 1; und
mindestens ein Polyol eines Acrylpolyols und eines Polyesterpolyols.

3. Verfahren zur Herstellung eines Beschichtungsfilms, umfassend:
einen Schritt des Aushärtens der in Anspruch 2 definierten Anstrich-/Lackzusammensetzung.

4. Beschichtungsfilm, erhalten durch Härten der in Anspruch 2 definierten Anstrich-/Lackzusammensetzung.

## Revendications

1. Composition de polyisocyanate qui est obtenue à partir d'un diisocyanate aliphatique comprenant du 1,6-diisocyanatohexane, la composition comprenant :
un groupe isocyanurate ;
un groupe uretdione ; et
un groupe représenté par la Formule (I),
dans laquelle une viscosité mesurée à 25 °C est de 200 mPa·s à 2 000 mPa·s, et
dans la composition de polyisocyanate, un rapport d'une quantité molaire du groupe représenté par la Formule (I) par rapport à une quantité molaire totale du groupe isocyanurate, du groupe uretdione et du groupe représenté par la Formule (I) est de 0,005 à 0,10 ; 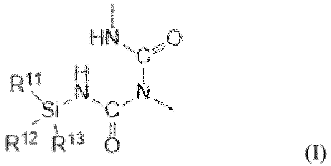 dans laquelle dans la Formule (I), R¹¹, R¹² et R¹³ représentent chacun indépendamment un atome d'hydrogène ou un groupe hydrocarboné comportant de 1 à 20 atomes de carbone qui peut comprendre au moins l'un quelconque d'un groupe ester et d'un groupe éther.

2. Composition de peinture, comprenant :
la composition de polyisocyanate selon la revendication 1 ; et
au moins un polyol d'un polyol acrylique et d'un polyol de polyester.

3. Procédé de fabrication d'un film de revêtement, comprenant :
une étape de durcissement de la composition de peinture selon la revendication 2.

4. Film de revêtement obtenu par durcissement de la composition de peinture selon la revendication 2.
